# EUROPEAN PATENT SPECIFICATION

(11) **EP 1 964 759 B1**
(45) Date of publication and mention of the grant of the patent: **28.10.2009**
(21) Application number: 08001840.1
(22) Date of filing: 31.01.2008
(51) Int. Cl.: B62K 19/12, B62K 11/04, B62K 19/30

(54) **Motorcycle having a seat rail structure**
Motorrad mit einer Sitzschienenstruktur
Motocyclette avec une structure de rail de siège

(30) Priority: 28.02.2007 JP 2007048655
(43) Date of publication of application: 03.09.2008
(73) Proprietor: Honda Motor Co., Ltd., Minato-ku Tokyo 107-8556 (JP)
(72) Inventor: Koda, Toshihiro c/o Honda R&D Co., Ltd., Wako-shi Saitama, 351-0193 (JP); Ueda, Junichi c/o Honda R&D Co., Ltd., Wako-shi Saitama, 351-0193 (JP); Mochizuki, Shinsuke c/o Honda R&D Co., Ltd., Wako-shi Saitama, 351-0193 (JP); Kawasaki, Yohei c/o Honda R&D Co., Ltd., Wako-shi Saitama, 351-0193 (JP)
(74) Representative: Liska, Horst

(56) References cited:
- EP-A- 1 550 605
- EP-A- 1 695 898
- JP-A- 1 317 886
- JP-A- 2006 240 345

## Description

### Technical Field

The present invention relates to a motorcycle comprising a seat rail structure for supporting a seat on which a passenger sits.

### Background Art

In the related art, a frame of a motorcycle is formed of iron-based material because it is easy to work and is inexpensive. However, in recent years, vehicle body frames formed of light metal such as aluminum or magnesium as row material are employed for achieving weight reduction of the vehicle body. Therefore, as seat rails for supporting a seat, those formed of aluminum by die casing are being employed now (for example, see Patent Document No. JP-A-2004-98875).

The seat rail disclosed in Patent Document No. JP-A-2004-98875 has a structure in which the frames positioned on the left and right are separated and the left and right frames are secured by tightening members via the cross members or the like.

A motorcycle having a seat rail structure according to the preamble of claims 1 or 2 is known from EP 1 550 605 A1.

JP 1317886 A discloses a seat frame for a motorcycle constituted of main body frames formed in a reverse triangle to provide a combined seat rail and back stay, cross members for connecting the frames to each other and a connecting section used also for a mud guard of a rear wheel. These members are molded integrally and divided left and right symmetrically into left and right frames by a dividing surface on the center axis of the vehicle body. Both frames are welded to each other on the dividing surface to assemble the integral seat frame.

EP 1 695 898 A1 discloses a seat frame for a motorcycle, the seat frame being composed of a magnesium alloy. The motorcycle seat frame includes a bottom section extending in a longitudinal direction, a pair of side wall section extending along the longitudinal direction and being provided on the bottom section so that the bottom section is interposed therebetween and at least one rib provided on the bottom section extending in a direction which traverses the longitudinal direction.

JP 2006-240345 A discloses a motorcycle having a seat frame extending backward from a vehicle body frame and supporting a seat. The seat frame is formed separately from the vehicle body frame and is detachably connected to a rear part of the vehicle body frame. The seat frame has a divided structure composed of a front half part and a rear half part. While supporting the seat for a rider by its front half part, the front half part of the seat frame is composed of left and right seat rails by casting molding and a cross member installed between the rear ends of at least these seat rails.

### Problems to be Solved by the Invention

The configuration in the related art is preferably in that the seat rails are easily manufactured not by welding or the like but by securing them by the tightening members. However, in the structure of securing by the tightening members, the assembly process is required, and hence it is difficult to improve the productivity.

When magnesium alloy is employed for the vehicle body frame, it is difficult to manufacture frames having high corrosion resistance while securing sufficient strength and rigidity.

It is an object of the present invention to provide a motorcycle comprising a seat rail structure with an improved corrosion resistance, in which a sufficient strength and rigidity are secured while achieving weight reduction of the vehicle body.

### Means for Solving the Problems

This object is achieved by a motorcycle having the features of claim 1 or 2.

According to the present invention, there is provided a motorcycle including a main frame and a seat rail formed of magnesium alloy to be secured to the main frame, wherein the seat rail includes a pair of left and right side wall portions extending rearward from the main frame, and a plurality of connecting portions formed into a substantially angular C-shape in cross section or into a substantially H-shape in cross section for connecting the left and right side wall portions, and wherein at least part of the connecting portions are connected at a level flush with or above the upper surface of the side wall portions, and the side wall portions and the connecting portions are integrally formed by die casting.

In this configuration, the seat rail is formed by die casting integrally without using tightening members. It is also possible to secure a clearance for allowing the up and down movement of a rear wheel arranged below the seat rail. In addition, sufficient strength and rigidity are secured while achieving weight reduction of the connecting portions.

Furthermore, the side wall portion is formed at the upper end thereof with an upper flange portion extending inwardly in the direction of the width of the seat rail along the longitudinal direction of the side wall portion and having a first flange portion extending downward from the distal end thereof, and at the lower end thereof with a lower flange portion extending outwardly in the direction of the width of the seat rail along the longitudinal direction of the side wall portion and having a second flange portion extending upward from the distal end thereof.

In this configuration, sufficient strength and rigidity are secured while achieving weight reduction of the left and right side wall portions.

It is also possible to provide a first rib to the connecting portions so as to extend in the longitudinal direction at the center of the substantially angular C-shaped cross section or the substantially H-shaped cross section thereof.

In this configuration, flexural strength and rigidity of the connecting portion are improved.

It is also possible to provide a second rib for connecting at least one of the upper flange portion and the lower flange portion with the side wall portions.

In this configuration, the strength of the connecting portions between the upper flange portion or the lower flange portion and the side wall portions is improved.

Furthermore, the magnesium alloy is AM50A or AM60B, and AM50A or AM60B includes rare earths added by 0.2 wt% to 0.5 Wt%.

In this configuration, corrosion resistance of the seat rail is improved.

Alternatively, the magnesium alloy is AM50A or AM60B, and AM50A or AM60B includes rare earths added by 2.0 wt% to 5.0 Wt%.

In this configuration, corrosion resistance is improved and strength and rigidity at elevated temperature are simultaneously improved.

### Advantage of the Invention

According to the present invention, there is provided a motorcycle including a main frame and a seat rail formed of magnesium alloy to be secured to the main frame, wherein the seat rail includes a pair of left and right side wall portions extending rearward from the main frame, and a plurality of connecting portions formed into a substantially angular C-shape in cross section or into a substantially H-shape in cross section for connecting the left and right side wall portions, and wherein at least part of the connecting portions are connected at a level flush with or above the upper surface of the side wall portions, and the side wall portions and the connecting portions are integrally formed by die casting. Therefore, it is not necessary to assemble the seat rail with the tightening members, and hence the productivity of the seat rail is improved. Since the entire seat rail is formed of magnesium alloy, the weight reduction of the vehicle body is achieved. Since at least part of the connecting portions are connected at a level flush with or the upper surface of the side wall portions, interference between a rear wheel and the connecting portions of the seat rail is avoided when the rear wheel arranged below the seat rail moves up and down. Furthermore, since the coefficient of cross section can be increased by forming the connecting portions into the substantially angular C-shape in cross section or in the substantially H-shape in cross section, sufficient strength and rigidity with respect to the bending or tensile load of the connecting portions and are secured.

The side wall portion is formed at the upper end thereof with an upper - flange portion extending inwardly in the direction of the width of the seat rail along the longitudinal direction of the side wall portion and having a first flange portion extending downward from the distal end thereof, and at the lower end thereof with a lower flange portion extending outwardly in the direction of the width of the seat rail along the longitudinal direction of the side wall portion and having a second flange portion extending upward from the distal end thereof. Therefore, in comparison with the structure in which the left and right side wall portions are solid, the weight reduction of side wall portions are achieved. Since the coefficient of cross section of the side wall portions is increased, sufficient strength and rigidity are secured for bending or tensile load of the side wall portions. Consequently, the strength of the entire seat rail is improved.

Since a first rib extending in the longitudinal direction is provided at the center of the substantially angular C-shaped cross section or the substantially H-shaped cross section of the connecting portions, the flexural strength and rigidity of the connecting portion are further improved. Consequently, the strength of the entire seat rail is further improved.

Since second ribs are provided so as to connect at least one of the upper flange portions and the lower flange portions with the side wall portions, the strength and rigidity of the connecting portions between the upper flange portions or the lower flange portions and the side wall portions are improved. Consequently, the strength of the entire seat rail is improved.

Since the magnesium alloy is AM50A or AM60B, and the rare earths include the AM50A or AM60B added by 0.2 wt% to 0.5 wt%, the corrosion resistance of the seat rail is improved. Consequently, reduction of the number of time of coating application for the surface processing or application of less-expensive surface processing are possible when applying the surface processing for corrosion resistance on the surface of the seat rail. Therefore, the number of processes of manufacturing the seat rail is reduced, and hence the productivity is improved.

Since the magnesium alloy is AM50A or AM60B, and the rare earths are added to the AM50A or AM60B by 2.0 wt% to 5.0 wt%, the corrosion resistance is improved, and the strength at elevated temperature is improved simultaneously. The rare earths improve toughness required for the frame in comparison with other high temperature strength improving additives (Ca, Sr, etc.).

### Brief Description of the Drawings

Fig. 1 is a left side view showing a motorcycle according to an embodiment of the present invention.
Fig. 2 is a left side view showing a vehicle body frame in Fig. 1.
Fig. 3 is a perspective view of a seat rail in Fig. 1 and Fig. 2 viewed obliquely from the right rear.
Fig. 4 is a perspective view of the seat rail in Fig. 3 viewed from a position lower than the view point in Fig. 3.
Fig. 5 is a plan view of the seat rail shown in Fig. 3.
Fig. 6 is a left side view of the seat rail shown in Fig. 3.
Fig. 7 is a front view of the seat rail shown in Fig. 3.
Fig. 8 is a bottom view of the seat rail shown in Fig. 3.
Fig. 9(a) is a cross-sectional view taken along the line A-A in Fig. 8, 9(b) is a cross-sectional view taken along the line B-B in Fig. 8, and 9(c) is a cross-sectional view taken along the line C-C in Fig. 8.
Fig. 10 is an enlarged perspective view of a connecting portion of a first connecting portion and a second connecting portion with respect to the wall portion or a first flange portion.
Fig. 11 is an enlarged perspective view of a connecting portion of a third connecting portion and a fourth connecting portion with respect to the wall portion.

### Best Mode for Carrying Out the Invention

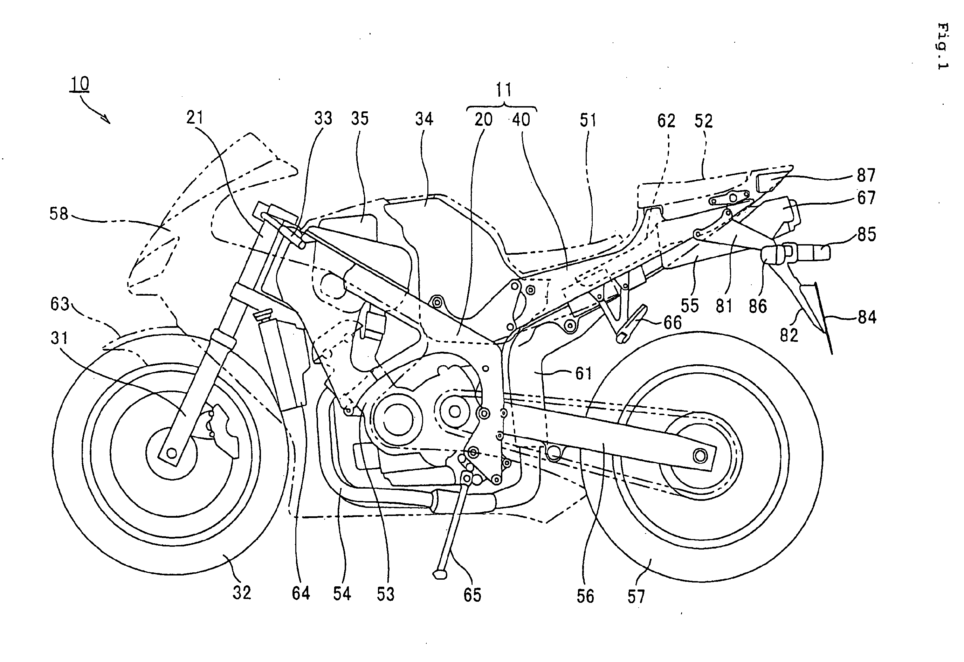

Referring now to the drawings, a seat rail structure of a motorcycle according to an embodiment of the present invention will be described. Fig. 1 is a left side view showing a motorcycle 10 according to an embodiment of the present invention. Directions used in the following description are based on Fig. 1, and the vertical direction of a vehicle body corresponds to the vertical direction of Fig. 1, the lateral direction of the vehicle body corresponds to the depth direction of a sheet plane of Fig. 1, and the fore-and-aft direction of the vehicle body corresponds to the lateral direction of the sheet plane of Fig. 1.

The motorcycle 10 includes a vehicle body frame 20 of twin spar type extending in the fore-and-aft direction, and a head pipe 21 is provided at the front side of the vehicle body frame 20. A front fork 31 extending downwardly is attached to the head pipe 21, and a handle 33 is connected to the upper side thereof. A front wheel 32 is attached to the lower side of the front fork 31. A seat rail 40 is attached to the rear side of the vehicle body frame 20 so as to extend further from a rear end portion rearwardly of the vehicle body. A front seat 51 on which a driver sits and a rear seat 52 on which a passenger sits are attached on the upper side of the seat rail 40, and the seat rail 40 serves as a rear frame which supports the front seat 51 and the rear seat 52.

The vehicle body frame 20 and the seat rail 40 constitute a vehicle body 11. The vehicle body 11 is entirely covered by a cowl 58 (shown by an imaginary line in Fig. 1).

The vehicle body frame 20 includes a fuel tank 34 and an air chamber 35 arranged on the front side of the fuel tank 34 attached to the upper portion thereof.

Arranged in a space of the vehicle body frame 20 is a four-cycle engine 53, and an exhaust pipe 54 is connected to an exhaust port positioned on a front portion of the engine 53. The exhaust pipe 54 is a metal pipe extending rearward from the exhaust port of the engine 53 through below the engine 53 to the rearwardly of the vehicle body frame 20, extending upward from the rear end thereof along the vehicle body frame 20, and extending from the upper end thereof along the seat rail 40. Attached at the terminal end portion of the exhaust pipe 54 is a muffler 55. The muffler 55 is arranged between side wall portions 100L, 100R, described later in detail, of the seat rail 40 in the cross-vehicle direction.

The exhaust pipe 54 is covered by a heat-insulating tube 61. The upper portion of the muffler 55 is covered by a heat-insulating panel 62, and left and right rear portions of the muffler 55 are covered by protectors 67. The protectors 67 are protecting panels attached to a stay 81 provided for attaching a rear fender 82.

Swing arms 56 suspended by rear cushions (not shown) are attached to the rear portion of the vehicle body frame 20 in the fore-and-aft direction of the vehicle body, and a rear wheel 57 is attached to rear end portions of the swing arms 56.

In the drawing, reference numeral 63 designates a front fender, reference numeral 64 designates a radiator, reference numeral 65 designates a stand, reference numeral 66 designates a passenger step, reference numeral 84 designates a number plate, reference numeral 85 designates a license plate lamp, reference numeral 86 designates a rear winker and reference numeral 87 designates a tail lamp.

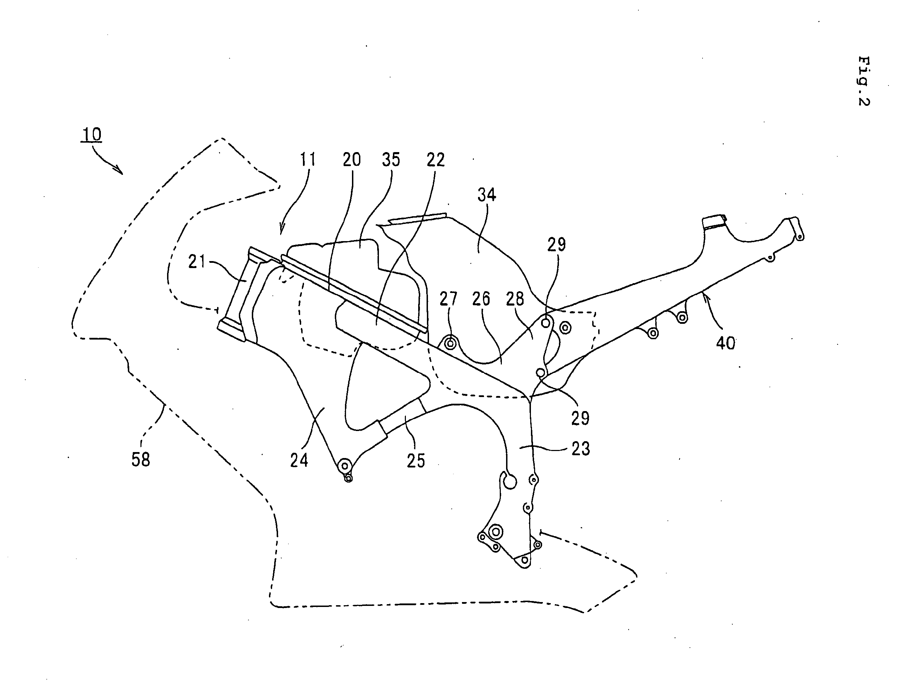

Fig. 2 is a left side view showing the vehicle body frame 20 in Fig. 1.

The vehicle body frame 20 includes the head pipe 21, left and right main frames 22, 22 extending rearward from the head pipe 21, left and right center frames 23, 23 (only the left one is shown in Fig. 2, hereinafter) extending downward from rear ends of the main frames 22, 22, left and right down frames 24, 24 extending rearward and downward from front portions of the head pipe 21 and the main frames 22, 22, left and right upper frames 25, 25 extending from lower ends of the down frames 24, 24 toward the rear of the main frames 22, 22, and a plurality of cross members, not shown. Part or the entire of these frame members are cast members.

The left and right main frames 22, 22 are provided with left and right pivot plates 26, 26 which extend upward from rear upper portions thereof. The left and right pivot plates 26, 26 are formed with fuel tank supporting portions 27, 27 at the front portions thereof, and with seat rail mounting portions 28, 28 at the rear portions thereof. The fuel tank supporting portions 27, 27 and the seat rail mounting portions 28, 28 are formed with through holes penetrating therethrough in the cross-vehicle direction. The seat rail 40, described later in detail, is attached to the seat rail mounting portions 28, 28 via bolts 29... (...indicates plural, hereinafter), and the seat rail 40 extends rearward from the rear upper portion of the vehicle body frame 20.

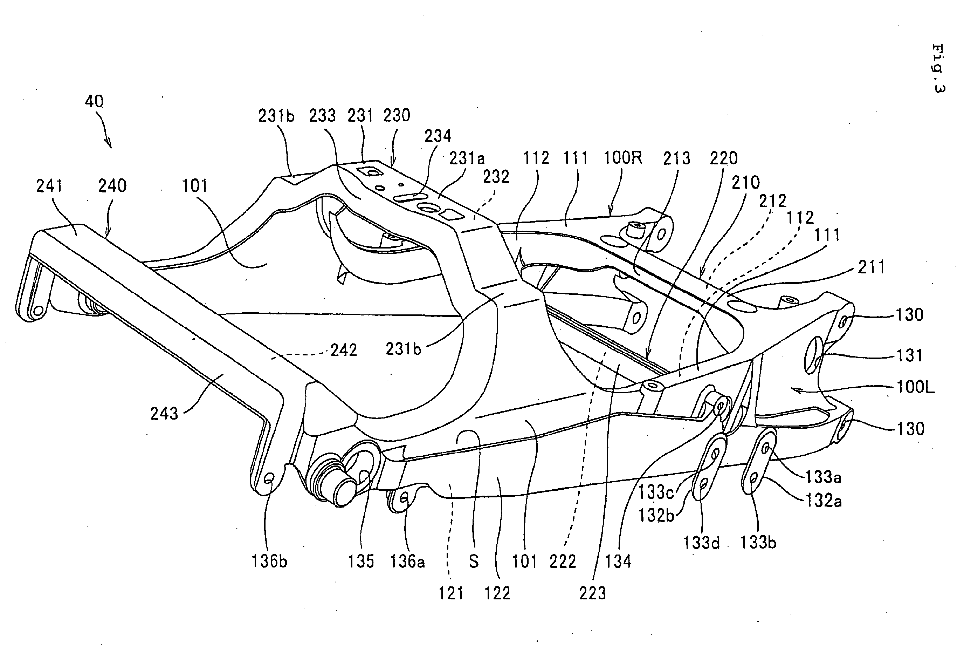

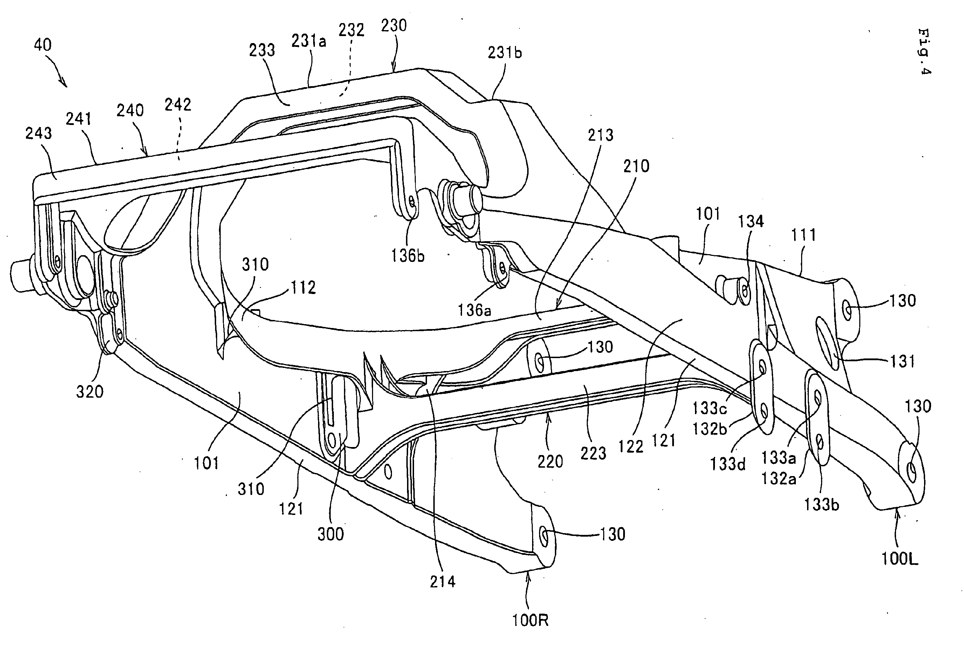

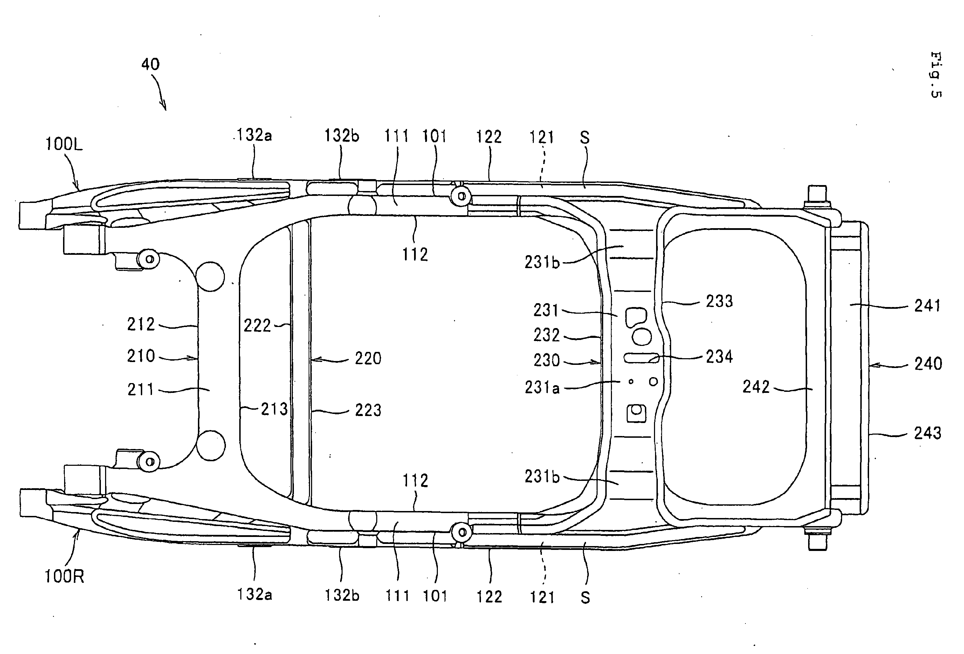

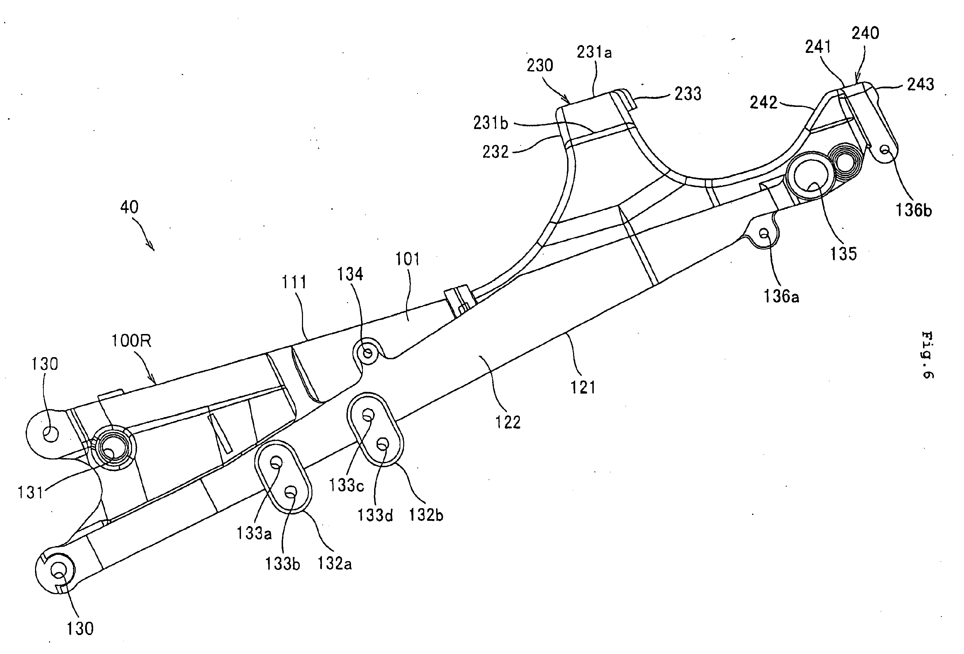

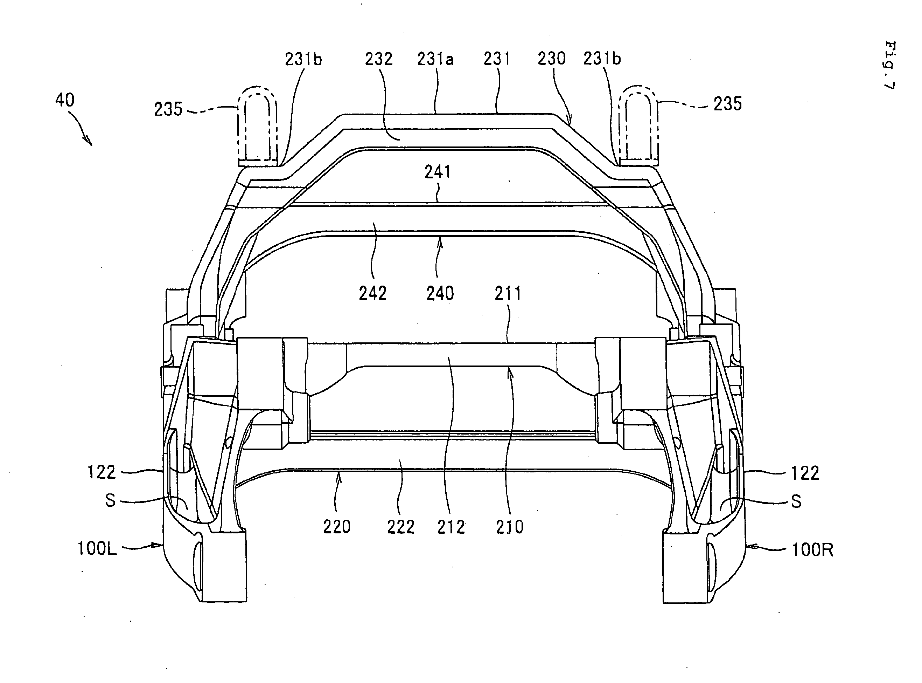

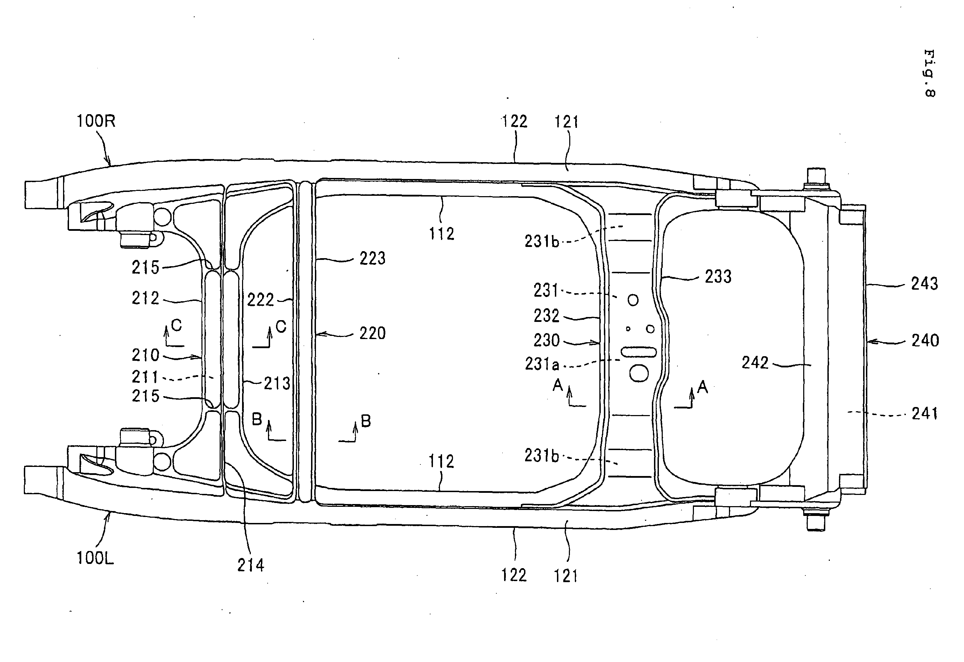

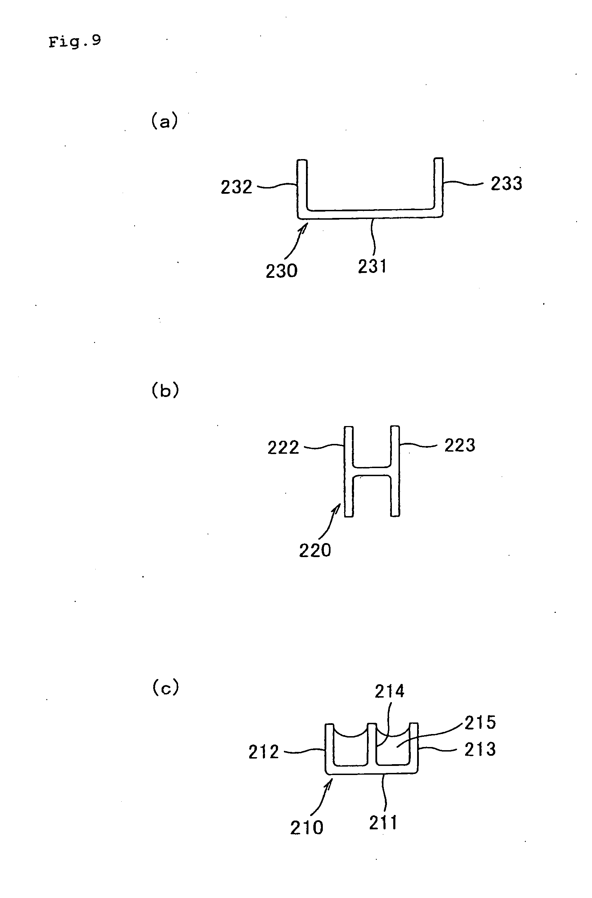

Fig. 3 to Fig. 8 show a simple body of the seat rail 40 in Fig. 1 and Fig. 2, Fig. 3 is a perspective view thereof viewed obliquely from the right rear, and Fig. 4 is a perspective view thereof viewed from a position lower than the view point in Fig. 3. Fig. 5 is a plan view, Fig. 6 is a left side view, Fig. 7 is a front view viewed from the front side of the vehicle body, Fig. 8 is a bottom view viewed from the lower side, and Fig. 9(a) to Fig. 9(c) are cross-sectional views taken along the lines A-A, B-B and C-C in Fig. 8 respectively. The right side of the seat rail 40 shown in these drawings corresponds to the front side of the vehicle body on the sheet plane in Fig. 3.

As shown in Fig. 3 and Fig. 4, the seat rail 40 is provided with the pair of left and right side wall portions 100L and 100R extending in the fore-and-aft direction of the vehicle body. The pair of left and right side wall portions 100L and 100R are connected by connecting portions (a first connecting portion 210, a second connecting portion 220, a third connecting portion 230, and a fourth connecting portion 240 in sequence from the front of the vehicle body). The seat rail 40 is integrally formed of magnesium alloy by die casting, described later in detail.

Firstly, the side wall portions 100L and 100R will be described. The side wall portions 100L and 100R are formed to be lateral symmetry, and a configuration described about one of the side wall portions 100L and the side wall portion 100R is equivalent to the configuration of the other one of those.

The side wall portions 100L and 100R each include a wall portion 101 (see Fig. 3, Fig. 5 and Fig. 6) extending upright in the vertical direction, an upper flange portion 111 (see Fig. 3, Fig. 5 and Fig. 6) positioned at an upper end portion of the wall portion 101, and a lower flange portion 121 (see Fig. 4 and Fig. 8) positioned at the lower end portion of the wall portion 101.

As shown in Fig. 3 and Fig. 5, the upper flange portion 111 extends inwardly of the seat rail 40 in the lateral direction from the entire portion of the wall portion 101 in the longitudinal direction (fore-and-aft direction). As shown in Fig. 3 and Fig. 4, a first flange portion 112 extends downwardly of the seat rail 40 from the distal end portion of the upper flange portion 111. In other words, when the side wall portions 100L and 100R are cut in the fore-and-aft direction of the vehicle body, the cross-sectional shape is a substantially angular C-shape having an opening on the lower side and being formed by the wall portion 101, the upper flange portion 111 and the first flange portion 112.

As shown in Fig. 4 and Fig. 8, the lower flange portion 121 extends outwardly of the seat rail 40 in the lateral direction from the entire portion of the wall portion 101 in the longitudinal direction. As shown in Fig. 4 and Fig. 8, a second flange portion 122 extends upwardly of the seat rail 40 from the distal end portion of the lower flange portion 121. In other words, when the side wall portions 100L and 100R are cut in the fore-and-aft direction of the vehicle body, the cross-sectional shape is a substantially angular C-shape having an opening on the upper side and being formed by the wall portion 101, the lower flange portion 121 and the second flange portion 122.

The wall portion 101, the upper flange portion 111, the first flange portion 112, the lower flange portion 121 and the second flange portion 122 are formed to have a thickness of at least 1.8 to 2.2 mm, portions required to have strength or rigidity are increased in thickness as needed, and a space S is provided between the first flange portion 112 and the wall portion 101 and between the second flange portion 122 and the wall portion 101, so that the weight reduction is achieved and the coefficient of cross section of the side wall portion 100L is increased in comparison with the case in which the side wall portions 100L and 100R are formed into a solid shape, thereby securing the strength with respect to the bending and tensile load.

The reason why the minimum thickness of the respective portions is set to 1.8 to 2.2 mm is to allow smooth flow of magnesium as a material at the time of die casting and prevent easy generation of mold cavities (voids) in the interior of the molded seat rail 40. Therefore, the thickness can be selected as needed for the optimum performance depending on the outer dimensions and the strength of the seat rail 40.

The front end portions of the side wall portions 100L and 100R are formed in the shape bifurcated in the vertical direction as shown in Fig. 6 (left side in Fig. 6 corresponds to the front side). The bifurcated portions are formed with mounting holes 130, 130 penetrating therethrough in the lateral direction. The mounting holes 130, 130 are adapted to be attached to the seat rail mounting portions 28 of the pivot plates 26, 26 with the bolts 29....

At the front end portions, the proximal portions of the bifurcation are formed with mounting holes 131 penetrating therethrough in the lateral direction for mounting the fuel tank 34.

As shown in Fig. 3 and Fig. 6, two mounting portions (front mounting portion 132a and rear mounting portion 132b) projecting from the second flange portion 122 further toward the left side of the vehicle body (the near side of the sheet plane of Fig. 6, the cross-vehicle direction) are formed at the front of the center of the second flange portion 122. The front mounting portion 132a and the rear mounting portion 132b project from the lower ends of the side wall portions 100L and 100R (the lower end of the lower flange portion 121) further downwardly by about 50 mm.

The front mounting portion 132a is formed with two mounting holes (an upper mounting hole 133a and a lower mounting hole 133b), and the rear mounting portion 132b is also formed with two mounting holes (an upper mounting hole 133c and a lower mounting hole 133d). The mounting holes 133a to 133d are adapted to attach the passenger step 66, a break reservoir tank (not shown) and the heat-insulating tube 61 or the like. As shown in Fig. 6, a mounting hole 134 for attaching a cowl is formed at an obliquely upper rear position of the rear mounting hole 132b (obliquely right rear in Fig. 6).

The side wall portions 100L and 100R are also formed with mounting holes 135 at rear portions on the side surfaces thereof for mounting the muffler 55 so as to penetrate therethrough in the lateral direction. Mounting holes 136a, 136b for mounting the stay 81 are formed on the left and right sides of the mounting holes 135 so as to penetrate therethrough in the lateral direction.

Subsequently, the first connecting portion 210, the second connecting portion 220, the third connecting portion 230 and the fourth connecting portion 240 will be described. The seat rail 40 in this embodiment includes four connecting portions. However, four or more connecting portions may be provided according to the strength of the seat rail 40 or, on the contrary, less than four connecting members may also be applicable.

As shown in Fig. 3 and Fig. 5, the first connecting portion 210 is formed to connect the first flange portions 112 of the side wall portions 100L and 100R. As shown in Fig. 8 and Fig. 9(c), the interior of the first connecting portion 210 is hollow. More specifically, the cross-sectional shape of the first connecting portion 210 cut in the cross-vehicle direction is an substantially angular C-shape having an opening on the lower side as shown in Fig. 9(c), and includes an upper flat portion 211, a front wall portion 212 an a rear wall portion 213.

The first connecting portion 210 of the upper planar portion 211 are connected so as to be flush with the upper planar portions of the upper flange portions 111 of the side wall portions 100L and 100R as shown in Fig. 3.

The first flange portion 112 extending from the rear side to the front side and the rear wall portion 213 of the first connecting portion 210 are connected via a gentle curved surface as shown in Fig. 3. In the same manner, the first flange portion 112 extending from the front side to the rear side and the front wall portion 212 of the first connecting portion 210 are connected with a gentle curved surface.

The center portions in the widthwise direction of the front wall portion 212 and the rear wall portion 213 are formed to be shorter in height in comparison with the both ends thereof, so as not to interfere with the components on the vehicle body side to which the seat rail 40 is attached.

The upper planar portion 211, the front wall portion 212, and the rear wall portion 213 have a minimum thickness of 1.8 to 2.2 mm like the upper flange portion 111 and the first flange portion 112, so that the weight reduction is achieved in comparison with the first connecting portion 210 the interior of which is solid. In addition, it is formed to a shape which allows the smooth flow of magnesium at the time of molding and prevents easy generation of mold cavities in the interior of the first connecting portion 210.

As shown in Fig. 8 and Fig. 9(c), a single rib 214 extending in the vertical direction along the longitudinal direction (the widthwise direction of the seat rail 40) of the first connecting portion 210 in the hollow interior of the first connecting portion 210. As shown in Fig. 8, two ribs 215 extending in the fore-and-aft direction of the seat rail 40 are formed at a distance in the hollow interior of the first connecting portion 210. With the provision of these ribs 214, 215, flexural strength and tensile strength of the first connecting portion 210 are improved. The number of ribs 214, 215 may be selected as needed.

As shown in Fig. 3, the second connecting portion 220 is positioned at obliquely lower rear side of the first connecting portion 210, and is formed to connect the wall portions 101 of the side wall portions 100L and 100R. The cross-sectional shape of the second connecting portion 220 cut in the cross-vehicle direction is a substantially H-shape having an opening on the upper side and lower side as shown in Fig. 9(b), and includes a front wall portion 222 and a rear planar portion 223.

The plate portion which constitutes the substantially H-shaped cross section has a thickness of 1.8 to 2.2 mm, so that the weight reduction is achieved in comparison with the second connecting portion 220 molded to be solid in the interior thereof, smooth flow of magnesium is ensured at the time of molding, and generation of molding cavities in the interior of the second connecting portion 220 is prevented.

As shown in Fig. 3, the third connecting portion 230 is positioned behind the second connecting portion 220 and above the first connecting portion 210 and the second connecting portion 220. As shown in Fig. 7, the third connecting portion 230 is formed to extend from the upper surface of the upper flange portion 111 upwardly and obliquely inwardly thereof (inwardly of the seat rail 40), and is formed to connect the upper flange portions 111 of the both side wall portions 100L and 100R in an arch shape (arcuate shape) protruding upward.

As shown in Fig. 9(a), the cross-sectional shape of the third connecting portion 230 cut in the cross-vehicle direction is formed into a substantially angular C-shape having an opening on the lower side and includes an upper planer portion 231, a front wall portion 232 and a rear wall portion 233 as shown in Fig. 3. The front wall portion 232 is continued (connected) to the first flange portions 112, 112 of the side wall portions 100L and 100R extending from the front side to the rear side in a twisted manner as shown in Fig. 3. On the other hand, the rear wall portion 233 is continued to the upper flange portions 111, 111 of the side wall portions 100L and 100R extending from the rear to the front side in a twisted manner as shown in Fig. 3.

As shown in Fig. 3 and Fig. 7, the upper planer portion 231 includes a first horizontal planer portion 231a positioned at the center, and two second horizontal planer portions 231b, 231b positioned on both sides of the first horizontal planer portion 231 a below the level thereof when viewed from the front side of the seat rail 40. The first horizontal planer portion 231a is adapted to place the rear seat 52 thereon, and includes mounting holes 234... for mounting the rear seat 52 formed thereon. The two second horizontal planer portions 231b, 231b are formed with mounting members 235 for fixing the rear seat 52 as shown by double-dashed chain lines in Fig. 7. The mounting members 235 may be formed integrally with the seat rail 40, and may be configured as separate mounting fixtures.

The upper planer portion 231, the front wall portion 232 and the rear wall portion 233 have a minimum thickness of 1.8 to 2.2 mm like the upper flange portion 111 and the first flange portion 112, and is configured to achieve the weight reduction in comparison with the third connecting portion 230 the interior of which is formed to be solid. In addition, it is formed to a shape which allows the smooth flow of magnesium at the time of molding and prevents easy generation of mold cavities in the interior of the third connecting portion 230.

As shown in Fig. 3, the fourth connecting portion 240 is positioned behind the third connecting portion 230, and is formed to connect the wall portions 101, 101 of the side wall portions 100L and 100R respectively. The cross-sectional shape of the fourth connecting portion 240 cut in the cross-vehicle direction is substantially angular C-shape having the opening on the lower side and, as shown in Fig. 3, includes an upper planer portion 241, a front side wall portion 242 and a rear side wall portion 243.

The upper planer portion 241 is formed to be positioned below the level of the first horizontal planer portion 231a and the second planer portion 231b of the third connecting portion 230 and above the upper planar portion 211 of the first connecting portion 210 as shown in Fig. 3 and Fig. 7.

The front side wall portion 242 is continued (connected) to the upper flange portions 111, 111 of the side wall portions 100L and 100R extending from the front side to the rear side as shown in Fig. 3. More specifically, the front wall portion 242 extends from the front end of the upper planer portion 241 obliquely toward the lower front in a direction in which the aforementioned substantially angular C-shaped opening is widened. On the other hand, the rear wall portion 243 extends substantially downward in the vertical direction from the rear end of the upper planer portion 241, and constitutes the rear end portion of the seat rail 40 as shown in Fig. 4.

The upper planer portion 241, the front side wall portion 242 and the rear side wall portion 243 have a minimum thickness of 1.8 to 2.2 mm like the upper flange portion 111 and the first flange portion 112, and are configured to achieve the weight reduction in comparison with the fourth connecting portion 240 the interior of which is formed to be solid. In addition, it is formed to a shape which allows the smooth flow of magnesium at the time of molding and prevents easy generation of mold cavities in the interior of the fourth connecting portion 240.

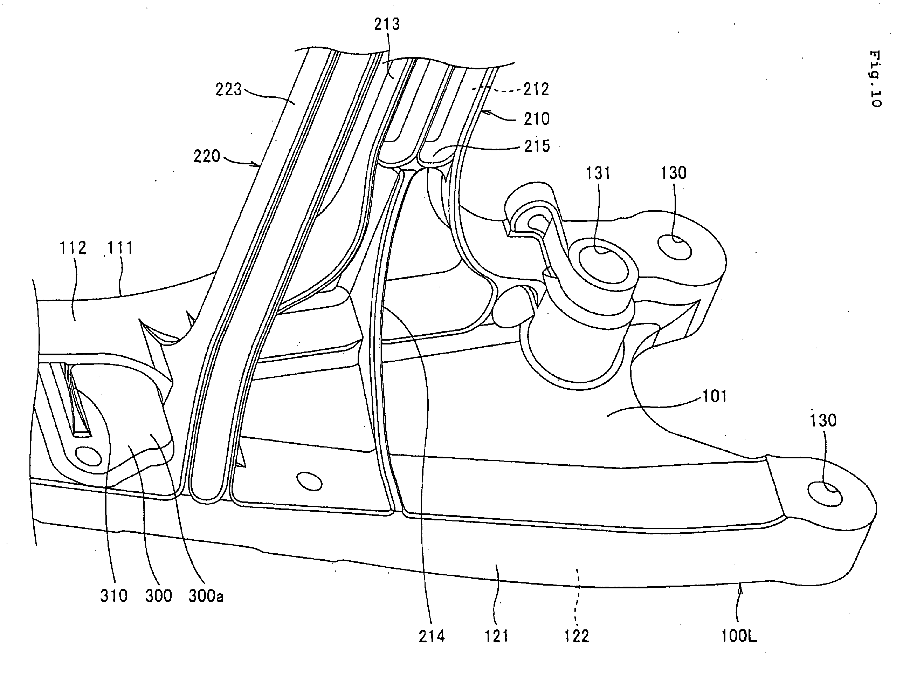

Fig. 10 is an enlarged perspective view showing a connecting portion of the first connecting portion 210 and the second connecting portion 220 with respect to the wall portion 101 or the first flange portion 112.

The rib 214 of the first connecting portion 210 is connected to the first flange portion 112 at the end portion thereof, and extends further downward to the lower flange portion 121. In other words, the rib 214 is formed to extend over five members of the upper planar portion 211 of the first connecting portion 210, the first flange portion 112, the upper flange portion 111, the wall portion 101 and the lower flange portion 121 so as to connect these members with respect to each other as shown in Fig. 10.

On the other hand, as shown in Fig. 10, formed on the back side of the second connecting portion 220 is a shoulder 300 projecting inwardly of the seat rail 40. The shoulder 300 is formed to extend over four members of the rear wall portion 223 of the second connecting portion 220, the upper flange portion 111, the wall portion 101 and the lower flange portion 121 so as to connect these members with respect to each other.

The shoulder 300 is formed with a rib 310 on an inner surface 300a thereof so as to connect three members of first flange portion 112, the upper flange portion 111 and the inner surface 300a.

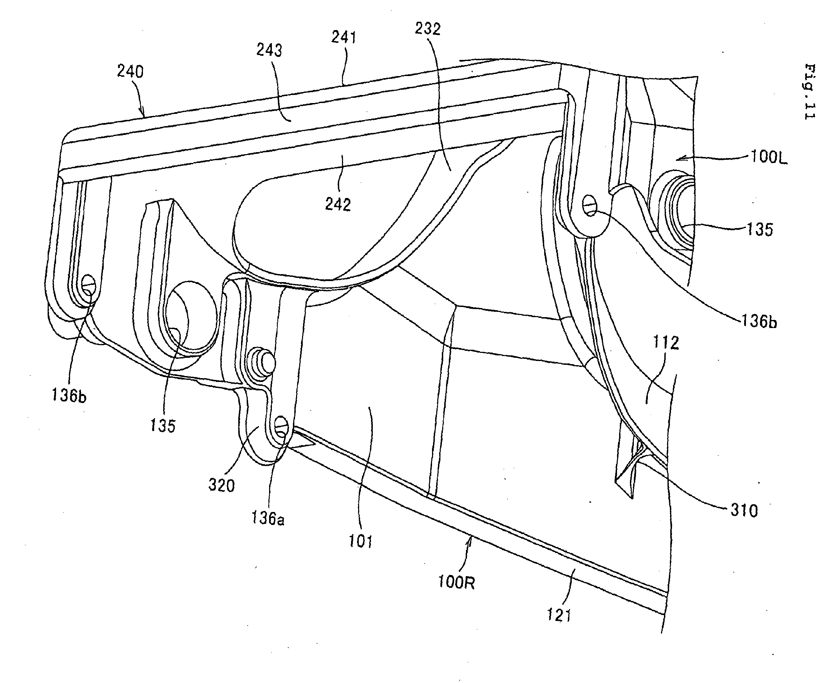

Fig. 11 is an enlarged perspective view showing a connecting portion of the third connecting portion 230 and the fourth connecting portion 240 with respect to the wall portion 101.

Formed on the front side of the third connecting portion 230 is the rib 310 which connects the first flange portion 112, the upper flange portion 111 and the wall portion 101 as shown in Fig. 11.

Formed between the third connecting portion 230 and the fourth connecting portion 240 is a shoulder 320 projecting from the wall portion 101 inwardly of the seat rail 40 as shown in Fig. 11. The shoulder 320 is formed to connect (join) the upper flange portion 111 which corresponds to a starting point of the rear wall portion 233 of the third connecting portion 230, a starting point of the front wall portion 242 of the fourth connecting portion 240, the wall portion 101 and the lower flange portion 121.

The seat rail 40 having the configuration as described above is formed to have corners with R-shape as needed as shown in Fig. 3, so that burrs or cracks are prevented from being formed at these corners when die casting.

Coating for preventing corrosion is applied on the surface of the seat rail 40, and a plurality of coating layers are formed thereon. The number of coating layers depends on the number of times of application on the seat rail 40 (the number of times of coating processes).

Furthermore, by forming the seat rail 40 to have the side wall portions 100L and 100R and the connecting portions 210 to 240 into the shape as described above, the metal die for die casting may be configured basically to have upper and lower halves.

Magnesium alloy, which is a material of the seat rail 40, will now be described.

The seat rail 40 is integrally formed of magnesium alloy and, more specifically, formed integrally by die casting. The type of the magnesium alloy is AM50A (ASTM standard, Al:4.4 to 5.4 wt%, Mn:0.26 to 0.6 wt%, Zn: 0.22 wt% max., Si:0.10 wt% max., Cu:0.010 wt% max., Ni:0.002 wt% max., Fe:0.004 wt% max., others:0.02 wt%), or AM60B (ASTM standard, Al:5.5 to 6.5 wt%, Mn:0.24 to 0.6 wt%, Zn:0.22 wt% max., Si:0.10 wt% max., Cu:0.010 wt% max., Ni:0.002 wt% max., Fe:0.005 wt% max., others:0.02 wt%), and is further added with rare earths (Ce, La, Nd, etc.) by 0.2 to 0.5 wt%.

The material AM50A or AM60B has a characteristic of being highly ductile and having high impact resistance, and used for handles or the like of the motor vehicle. The corrosion resistance is improved by adding the rare earths.

By adding the rare earths to the material of the seat rail 40, that is, aforementioned AM50A or AM60B by 2.0 to 5.0 wt%, the strength at elevated temperature is improved in addition to the corrosion resistance.

According to the seat rail structure of the motorcycle in this embodiment of the present invention, the seat rail 40 includes the pair of left and right side wall portions 100L and 100R extending rearward from the main frame 22 and four connecting portions, that is, the first connecting portion 210, the second connecting portion 220, the third connecting portion 230, and the fourth connecting portion 240, which connect the side wall portions 100L and 100R, and is integrally formed by casting the side wall portions 100L and 100R and these four connecting portions. Therefore, it is not necessary to assemble the seat rail 40 with tightening members or the like, and hence the productivity of the seat rail 40 is improved. Since the entire part of the seat rail 40 is formed of magnesium alloy, the weight reduction of the vehicle body is achieved. Since the magnesium alloy is superior in vibration absorbing mechanism, vibrations from the engine or the road surface during the travel are absorbed, so that a comfortable driving is realized.

Since the connection of the third connecting portion 230 is located above the level of the upper surface of the upper flange portion 111 of the side wall portions 100L and 100R, interference between the rear wheel 57 and the third connecting portion 230 of the seat rail 40 is avoided when the rear wheel 57 arranged below the seat rail 40 moves up and down. Since the internal space of the inner side of the seat rail 40 is widened, interference between the components to be attached to the motorcycle 10 side, particularly, the muffler 55 and the seat rail 40 is avoided.

Furthermore, since the first connecting portion 210, the second connecting portion 220, the third connecting portion 230 and the fourth connecting portion 240 are formed to have substantially an angular C-shape or a substantially H-shape in cross section, and the four connecting portions are composed of combinations of the plate shaped portions having a thickness of 1.8 mm to 2.2 mm, the weights of the respective connecting portions 210, 220, 230, 240 are reduced. Since the coefficients of cross section of the respective connecting portions 210, 220, 230, 240 are increased, sufficient strength and rigidity against bending or tensile strength of the connecting portion are secured. Consequently, the strength and rigidity of the entire seat rail 40 are improved.

The upper end portions of the side wall portions 100L and 100R are formed with the upper flange portions 111 extending inwardly of the seat rail 40 along the longitudinal direction of the side wall portions 100L and 100R and the first flange portions 112 extending downward from the distal end portions of the upper flange portions 111, and the lower end portions of the side wall portions 100L and 100R are formed with the lower flange portions 121 extending outwardly of the seat rail 40 along the longitudinal direction of the side wall portions 100L and 100R and the second flange portions 122 extending upward from the distal end portions of the lower flange portions 121. Therefore, in comparison with the structure in which the left and right side wall portions 100L and 100R are solid, the weight reduction of the side wall portions 100L and 100R is achieved. Since the coefficients of cross section of the side wall portions 100L and 100R are increased, sufficient strength and rigidity are secured for bending or tensile load of the side wall portions 100L and 100R. Consequently, the strength and rigidity of the entire seat rail 40 are improved.

Since the rib 214 is provided along the center of substantially angular C-shaped cross section of the first connecting portion 210 so as to extend over the five members of the upper planar portion 211 of the first connecting portion 210, the first flange portion 112, the upper flange portion 111, the wall portion 101 and the lower flange portion 121 so as to be connected to each other, the flexural strength and rigidity of the first connecting portion 210 are further improved. Consequently, the strength of the entire seat rail 40 is further improved.

Since the shoulders 320 are provided so as to connect at least one of the upper flange portions 111 and the lower flange portions 121 with the wall portions 101 of the side wall portions 100L and 100R, the strength and rigidity of the connecting portions between the upper flange portions 111 or the lower flange portions 121 and the wall portions 101 are improved. Consequently, the strength and rigidity of the entire seat rail 40 are improved.

On the other hand, since the material of the magnesium alloy is AM50A or AM60B, and the rare earths are added to the AM50A or AM60B by 0.2 wt% to 0.5 wt%, the corrosion resistance of the seat rail 40 is improved. Consequently, the number of the processes to apply surface treatment (for example, chemical conversion or electro deposition) for corrosion resistance on the surface of the seat rail 40 may be reduced. Therefore, the number of steps for manufacturing the seat rail40 is reduced in comparison with the related art.

Since the material of the magnesium alloy is AM50A or AM60B, and the rare earths are added to the AM50A or AM60B by 2.0 wt% to 5.0 wt%, the corrosion resistance is improved, and the strength at elevated temperature is improved. The rare earths improve toughness required for the frame in comparison with other high temperature strength improving additives (Ca, Sr, etc.).

The invention is directed to a motorcycle comprising a seat rail structure with an improved corrosion resistance, in which sufficient strength and rigidity are secured while achieving weight reduction of a vehicle body.

## Claims

1. A motorcycle having a main frame (22) and a seat rail (40) to be secured to the main frame (22), the seat rail (40) comprising:
a pair of left and right side wall portions (100L, 100R) extending rearward from the main frame (22), and a plurality of connecting portions (210, 220, 230, 240) for connecting the left and right side wall portions (100L, 100R), wherein at least part of the connecting portions are connected at a level flush with or above the upper surface of the side wall portions (100L, 100R), and the side wall portions (100L, 100R) and
the connecting portions are integrally formed by die casting,
**characterized in that**
the seat rail (40) is formed of magnesium alloy,
the plurality of connecting portions (210, 220, 230, 240) is formed into a substantially angular C-shape in cross section or into a substantially H-shape in cross section,
the side wall portions (100L, 100R) are formed at the upper end thereof with an upper flange portion (111) extending inwardly in the direction of the width of the seat rail (40) along the longitudinal direction of the side wall portions (100L, 100R) and having a first flange portion (112) extending downward from the distal end thereof, and at the lower end thereof with a lower flange portion (121) extending outwardly in the direction of the width of the seat rail (40) along the longitudinal direction of the side wall portions (100L, 100R) and having a second flange portion (122) extending upward from the distal end thereof, and
the magnesium alloy is AM50A or AM60B, and AM50A or AM60B includes rare earths added by 0.2 wt% to 0.5 wt%.

2. A motorcycle having a main frame (22) and a seat rail (40) to be secured to the main frame (22), the seat rail (40) comprising:
a pair of left and right side wall portions (100L, 100R) extending rearward from the main frame (22), and a plurality of connecting portions (210, 220, 230, 240) for connecting the left and right side wall portions (100L, 100R), wherein at least part of the connecting portions are connected at a level flush with or above the upper surface of the side wall portions (100L, 100R), and the side wall portions (100L, 100R) and the connecting portions are integrally formed by die casting,
**characterized in that**
the seat rail (40) is formed of magnesium alloy,
the plurality of connecting portions (210, 220, 230, 240) is formed into a substantially angular C-shape in cross section or into a substantially H-shape in cross section,
the side wall portions (100L, 100R) are formed at the upper end thereof with an upper flange portion (111) extending inwardly in the direction of the width of the seat rail (40) along the longitudinal direction of the side wall portions (100L, 100R) and having a first flange portion (112) extending downward from the distal end thereof, and at the lower end thereof with a lower flange portion (121) extending outwardly in the direction of the width of the seat rail (40) along the longitudinal direction of the side wall portions (100L, 100R) and having a second flange portion (122) extending upward from the distal end thereof, and
the magnesium alloy is AM50A or AM60B and AM50A or AM60B includes rare earths added by 2.0 wt% to 5.0 wt%.

3. The motorcycle (10) according to Claims 1 or 2 comprising a first rib (214) extending in the longitudinal direction at the center of the substantially angular C-shaped cross section or the substantially H-shaped cross section of the connecting portions.

4. The motorcycle (10) according to any one of Claims 1 to 3 comprising a second rib (215) for connecting at least one of the upper flange portion (111) and the lower flange portion (121) with the side wall portions (100L, 100R).

5. The motorcycle (10) according to any one of Claims 1 to 4, **characterized in that**
two mounting portions (132a, 132b) for attaching a passenger step (66) to the seat rail (40) are formed at the front of the center of the second flange portions (122), and
the plurality of connecting portions comprise a first connecting portion (210) connecting the first flange portions (112) of the side wall portions (100L, 100R), a second connecting portion (220) positioned at obliquely lower rear side of the first connecting portion (210) and connecting wall portions (101) of the side wall portions (100L, 100R), and a third connecting portion (230) positioned behind and above the second connecting portion (220) and connecting the upper flange portions (111) of the side wall portions (100L, 100R), wherein
the second connecting portion (220) is connected to the wall portions (101) of the side wall portions (100L, 100R) at positions respectively between said two mounting portions (132a, 132b) in the longitudinal direction of the side wall portions (100L, 100R).

## Patentansprüche

1. Kraftrad mit einem Hauptrahmen (22) und einer Sitzschiene (40), welche an dem Hauptrahmen (22) zu befestigen ist, wobei die Sitzschiene (40) umfasst:
ein Paar von linken und rechten Seitenwandabschnitten (100L, 100R), welche sich von dem Hauptrahmen (22) aus nach hinten erstrecken, und
eine Mehrzahl von Verbindungsabschnitten (210, 220, 230, 240), um die linken und rechten Seitenwandabschnitte (100L, 100R) zu verbinden, wobei wenigstens ein Teil von den Verbindungsabschnitten auf einem Niveau verbunden sind, welches zu der oberen Fläche von den Seitenwandabschnitten (100L, 100R) bündig ist oder über dieser liegt, und die Seitenwandabschnitte (100L, 100R) und die Verbindungsabschnitte integral durch druckgießen ausgebildet sind,
**dadurch gekennzeichnet, dass**
die Sitzschiene (40) aus einer Magnesiumlegierung gebildet ist,
die Mehrzahl von Verbindungsabschnitten (210, 220, 230, 240) in einer im Wesentlichen winkeligen C-Form im Querschnitt oder in einer im Wesentlichen H-Form im Querschnitt ausgebildet ist,
die Seitenwandabschnitte (100L, 100R) an ihrem oberen Ende mit einem oberen Flanschabschnitt (111) ausgebildet sind, welcher sich längs der Längsrichtung der Seitenwandabschnitte (100L, 100R) in der Breitenrichtung der Sitzschiene (40) nach innen erstreckt und einen ersten Flanschabschnitt (112) hat, welcher sich von seinem distalen Ende nach unten erstreckt, und an ihrem unteren Ende mit einem unteren Flanschabschnitt (121) ausgebildet sind, welcher sich längs der Längsrichtung der Seitenwandabschnitte (100L, 100R) in der Breitenrichtung der Sitzschiene (40) nach außen erstreckt und einen zweiten Flanschabschnitt (122) hat, welcher sich von seinem distalen Ende nach oben erstreckt, und
die Magnesiumlegierung AM50A oder AM60B ist und AM50A oder AM60B Seltenerden umfasst, welche mit 0,2 Gew.-% bis 0,5 Gew.-% zugegeben sind.

2. Kraftrad mit einem Hauptrahmen (22) und einer Sitzschiene (40), welche an dem Hauptrahmen (22) zu befestigen ist, wobei die Sitzschiene (40) umfasst:
ein Paar von linken und rechten Seitenwandabschnitten (100L, 100R), welche sich von dem Hauptrahmen (22) aus nach hinten erstrecken, und
eine Mehrzahl von Verbindungsabschnitten (210, 220, 230, 240), um die linken und rechten Seitenwandabschnitte (100L, 100R) zu verbinden, wobei wenigstens ein Teil von den Verbindungsabschnitten auf einem Niveau verbunden sind, welches zu der oberen Fläche von den Seitenwandabschnitten (100L, 100R) bündig ist oder über dieser liegt, und die Seitenwandabschnitte (100L, 100R) und die Verbindungsabschnitte integral durch druckgießen ausgebildet sind,
**dadurch gekennzeichnet, dass**
die Sitzschiene (40) aus einer Magnesiumlegierung gebildet ist,
die Mehrzahl von Verbindungsabschnitten (210, 220, 230, 240) in einer im Wesentlichen winkeligen C-Form im Querschnitt oder in einer im Wesentlichen H-Form im Querschnitt ausgebildet ist,
die Seitenwandabschnitte (100L, 100R) an ihrem oberen Ende mit einem oberen Flanschabschnitt (111) ausgebildet sind, welcher sich längs der Längsrichtung der Seitenwandabschnitte (100L, 100R) in der Breitenrichtung der Sitzschiene (40) nach innen erstreckt und einen ersten Flanschabschnitt (112) hat, welcher sich von seinem distalen Ende nach unten erstreckt, und an ihrem unteren Ende mit einem unteren Flanschabschnitt (121) ausgebildet sind, welcher sich längs der Längsrichtung der Seitenwandabschnitte (100L, 100R) in der Breitenrichtung der Sitzschiene (40) nach außen erstreckt und einen zweiten Flanschabschnitt (122) hat, welcher sich von seinem distalen Ende nach oben erstreckt, und
die Magnesiumlegierung AM50A oder AM60B ist und AM50A oder AM60B Seltenerden umfasst, welche mit 2,0 Gew.-% bis 5,0 Gew.-% zugegeben sind.

3. Kraftrad (10) gemäß Ansprüchen 1 oder 2, umfassend eine erste Rippe (214), welche sich in der Längsrichtung in der Mitte des im Wesentlichen winkeligen C-förmigen Querschnitts oder des im Wesentlichen H-förmigen Querschnitts von den Verbindungsabschnitten erstreckt.

4. Kraftrad (10) gemäß einem der Ansprüche 1 bis 3, umfassend eine zweite Rippe (215), um wenigstens einen von dem oberen Flanschabschnitt (111) und dem unteren Flanschabschnitt (121) mit den Seitenwandabschnitten (100L, 100R) zu verbinden.

5. Kraftrad (10) gemäß einem der Ansprüche 1 bis 4, **dadurch gekennzeichnet, dass**
zwei Befestigungsabschnitte (132a, 132b), um einen Beifahrertritt (66) an der Sitzschiene (40) anzubringen, an der Vorderseite der Mitte von den zweiten Flanschabschnitten (122) ausgebildet sind, und
die Mehrzahl von Verbindungsabschnitten einen ersten Verbindungsabschnitt (210) umfassen, welcher die ersten Flanschabschnitte (112) von den Seitenwandabschnitten (100L, 100R) verbindet, einen zweiten Verbindungsabschnitt (220) umfassen, welcher an einer schräg unteren hinteren Seite von dem ersten Verbindungsabschnitt (210) angeordnet ist und Wandabschnitte (101) von den Seitenwandabschnitten (100L, 100R) verbindet, und einen dritten Verbindungsabschnitt (230) umfassen, welcher hinter und oberhalb des zweiten Verbindungsabschnitts (220) angeordnet ist und die oberen Flanschabschnitte (111) von den Seitenwandabschnitten (100L, 100R) verbindet, wobei
der zweite Verbindungsabschnitt (220) mit den Wandabschnitten (101) von den Seitenwandabschnitten (100L, 100R) jeweils an Positionen zwischen den zwei Befestigungsabschnitten (132a, 132b) in der Längsrichtung von den Seitenwandabschnitten (100L, 100R) verbunden ist.

## Revendications

1. Motocyclette comportant un cadre principal (22) et un rail de selle (40) à fixer au cadre principal (22), le rail de selle (40) comprenant :
une paire de parties de parois latérales gauche et droite (100L, 100R) s'étendant vers l'arrière à partir du cadre principal (22), et une pluralité de parties de liaison (210, 220, 230, 240) pour relier les parties de parois latérales gauche et droite (100L, 100R), dans laquelle au moins une partie des parties de liaison sont reliées à un même niveau que la surface supérieure des parties de parois latérales (100L, 100R) ou au-dessus de celle-ci, et les parties de parois latérales (100L, 100R) et les parties de liaison sont formées d'un seul tenant par coulée en coquille,
**caractérisée en ce que**
le rail de selle (40) est constitué d'un alliage de magnésium,
la pluralité de parties de liaison (210, 220, 230, 240) est formée en une forme en C sensiblement anguleux en coupe ou en une forme sensiblement en H en coupe,
les parties de parois latérales (100L, 100R) comportent, à leur extrémité supérieure, une partie de rebord supérieur (111) s'étendant vers l'intérieur dans la direction de la largeur du rail de selle (40) le long de la direction longitudinale des parties de parois latérales (100L, 100R) et comportant une première partie de rebord (112) s'étendant vers le bas à partir de leur extrémité distale et, à leur extrémité inférieure, une partie de rebord inférieur (121) s'étendant vers l'extérieur dans la direction de la largeur du rail de selle (40) le long de la direction longitudinale des parties de parois latérales (100L, 100R) et comportant une deuxième partie de rebord (122) s'étendant vers le haut à partir de leur extrémité distale, et
l'alliage de magnésium est du AM50A ou du AM60B, et le AM50A ou le AM60B comprend des terres rares ajoutées dans la proportion de 0,2 % en poids à 0,5 % en poids.

2. Motocyclette comportant un cadre principal (22) et un rail de selle (40) à fixer au cadre principal (22), le rail de selle (40) comprenant :
une paire de parties de parois latérales gauche et droite (100L, 100R) s'étendant vers l'arrière à partir du cadre principal (22), et une pluralité de parties de liaison (210, 220, 230, 240) pour relier les parties de parois latérales gauche et droite (100L, 100R), dans laquelle au moins une partie des parties de liaison sont reliées au même niveau que la surface supérieure des parties de parois latérales (100L, 100R) ou au-dessus de celle-ci, et les parties de parois latérales (100L, 100R) et les parties de liaison sont formées d'un seul tenant par coulée en coquille,
**caractérisée en ce que**
le rail de selle (40) est constitué d'un alliage de magnésium,
la pluralité de parties de liaison (210, 220, 230, 240) est formée en une forme en C sensiblement anguleux en coupe ou en une forme sensiblement en H en coupe,
les parties de parois latérales (100L, 100R) comportent, à leur extrémité supérieure, une partie de rebord supérieur (111) s'étendant vers l'intérieur dans la direction de la largeur du rail de selle (40) le long de la direction longitudinale des parties de parois latérales (100L, 100R) et comportant une première partie de rebord (112) s'étendant vers le bas à partir de leur extrémité distale et, à leur extrémité inférieure, une partie de rebord inférieur (121) s'étendant vers l'extérieur dans la direction de la largeur du rail de selle (40) le long de la direction longitudinale des parties de parois latérales (100L, 100R) et comportant une deuxième partie de rebord (122) s'étendant vers le haut à partir de leur extrémité distale, et
l'alliage de magnésium est du AM50A ou du AM60B et le AM50A ou le AM60B comprend des terres rares ajoutées dans une proportion de 2,0 % en poids à 5,0 % en poids.

3. Motocyclette (10) selon la revendication 1 ou 2, comprenant une première nervure (214) s'étendant dans la direction longitudinale au centre de la section transversale en forme de C sensiblement anguleux ou de la section transversale sensiblement en forme de H des parties de liaison.

4. Motocyclette (10) selon l'une quelconque des revendications 1 à 3, comprenant une deuxième nervure (215) pour relier au moins l'une de la partie de rebord supérieur (111) et de la partie de rebord inférieur (121) aux parties de parois latérales (100L, 100R).

5. Motocyclette (10) selon l'une quelconque des revendications 1 à 4, **caractérisée en ce que**
deux parties de montage (132a, 132b) pour fixer un repose-pied de passager (66) au rail de selle (40) sont formées en avant du centre des deuxièmes parties de rebord (122), et
la pluralité de parties de liaison comprend une première partie de liaison (210) reliant les premières parties de rebord (112) des parties de parois latérales (100L, 100R), une deuxième partie de liaison (220) positionnée du côté arrière inférieur en oblique de la première partie de liaison (210) et reliant les parties de paroi (101) des parties de parois latérales (100L, 100R), et une troisième partie de liaison (230) positionnée derrière et au-dessus de la deuxième partie de liaison (220) et reliant les parties de rebord supérieures (111) des parties de parois latérales (100L, 100R), dans laquelle
la deuxième partie de liaison (220) est reliée aux parties de paroi (101) des parties de parois latérales (100L, 100R) à des positions respectivement entre lesdites deux parties de montage (132a, 132b) dans la direction longitudinale des parties de parois latérales (100L, 100R).
